# EUROPEAN PATENT SPECIFICATION

(11) **EP 3 261 431 B1**
(45) Date of publication and mention of the grant of the patent: **08.07.2020**
(21) Application number: 15866386.4
(22) Date of filing: 24.04.2015
(51) Int. Cl.: A01G 31/00, A01G 31/02, A01G 31/06

(54) **SOILLESS PLANT CULTIVATING CONTAINER**
ERDLOSER PFLANZENZUCHTBEHÄLTER
RÉCIPIENT DE CULTURE DE PLANTE HYDROPONIQUE

(30) Priority: 23.02.2015 ZA 201501201
(43) Date of publication of application: 03.01.2018
(73) Proprietor: E-Smarts Global Licensing Ltd, Ebene 72201 (MU)
(72) Inventor: VAN DER MERWE, Pieter Gideo, 0056 Pretoria (ZA)
(74) Representative: Kador & Partner PartG mbB
(86) International application number: PCT/ZA2015/000028
(87) International publication number: WO 2016/138544

(56) References cited:
- WO-A1-92/15194
- CN-A- 104 206 199
- US-A1- 2012 167 460
- US-A1- 2013 118 074
- US-A1- 2014 083 007

## Description

### TECHNICAL FIELD OF THE INVENTION

This invention relates to soilless plant cultivating containers for soilless cultivation of plants, more specifically it relates to a soilless containers for high density cultivation of plants in a general vertically orientation relative to a ground surface.

### BACKGROUND TO THE INVENTION

The inventor is aware of soilless growing systems where plants, such as vegetables are cultivated by exposure to constant supply of nutrient containing fluid. Some of the problems associated with the commonly known soilless plant cultivating containers and or tubes, are that the nutrient rich fluid tend to escape through the planting holes in the containers, especially when orientated substantially vertically relative to a ground surface, and as a result of the rich nutrient levels, cause overgrow of unwanted algae on the outer surface of the containers and or tubes.

One of the other problems associated with soilless cultivation of plants is due to the constant exposure of roots to fluid, little or no oxygen is available for uptake by the plant roots. Oxygen is an essential plant nutrient and plant root systems require oxygen for aerobic respiration, an essential plant process that releases energy for root growth and nutrient uptake. Injury from low (or no) oxygen in the root zone can take several forms and these will differ in severity between plant types.

US2013118074 (A1) discloses a hydroponic modular planting system including individual growing modules, each having a combined growing chamber and plant supporting surface for growing plants hydroponically using a nutrient-rich solution. The individual growing modules can be stacked vertically and/or laterally to form a modular planting system built from any number of individual growing modules. The modular planting system can be formed into a large number of possible shapes and sizes and can therefore be conformed to a variety of growing environments.

US2014083007 (A1) discloses an apparatus for hydroponic cultivation of plants comprising conical-shaped modules connected end to end with dovetail joints forming a pyramid-like spiral structure with a hollow tube-like interior which acts as a conduit for the flow of water or nutrient-rich solutions over the roots of plants placed in perforated divots on the top sections of the modules either on their own or in an inert medium matrix. The apparatus is also configured to be capable of use for aeroponic gardening or in the alternative, traditional gardening using potting or garden soil.

US2012167460 (A1) discloses a stackable cultivation tower system for creating a facility and process that is used to cultivate vegetation in a reduced indoor physical area, conserve resources and promote faster plant. The present invention is further comprised of vertically stacked components for planting vegetation to be cultivated to reduce the space, an irrigation system that is regulated to optimally control application of water and a light source to provide various types of lighting to promote faster growth. The components are commercially readily available and at costs that allow the stackable cultivation tower system to produce faster growth, higher yields economically.

CN104206199 (A) provides a novel vertical type flowerpot which aims to solve the problems that watering and fertilization of an existing hanging plant cultivation flowerpot are inconvenient, and the decoration modeling is single. According to the technical scheme, the vertical type flowerpot comprises a hollow tube and a base. The vertical type flowerpot is characterized in that the lower end of the hollow tube is fixed on the base, and the upper end of the hollow tube is connected with a planting hopper. The vertical type flowerpot can be used for traditional soil cultivation and also can be used for soil-less cultivation, the soil-less cultivation can be either substrate culture or water culture, the vertical type flowerpot is further suitable for self-water absorption cultivation, and thus the problems that watering and fertilizer applying of indoor flower culture are troublesome, insanitary and the like can be well solved. By means of the vertical type flowerpot, various modelings can be added, and therefore the decorative effect of flowers is greatly enriched.

WO9215194 (A1) intends to enhance a spatial effect of land and energy efficiency in hydroponics. As means to fulfill the above purpose, panels carrying plants and having holes into which water absorptive plug-like bodies are fitted are vertically arranged side by side and water is made flow down from the top of said panel to the rear side thereof by a water pouring device, whereby a vertical type planting bed in which water is fed to the plants through said water absorptive plug-like bodies is provided.

Soilless plant systems are associated with high capital investment, thus, the higher the density of plants per square meter in a typical soilless greenhouse type environment, the better the financial returns on investment.

After having considered and taking into account the above, the applicant proposes the invention as described hereunder.

### SUMMARY OF THE INVENTION

According to an aspect of the invention there is provided a soilless plant cultivating container in substantially vertically orientation relative to a ground surface which includes;
an elongate body of generally wave shaped form having a flow channel defined therethrough; and
at least one receptacle defined in a sidewall of the body, located in a concave region of the elongate body, the receptacle being in fluid communication with the flow channel for receiving and supporting a plant therein, wherein the elongate body includes engagement formations defined on end regions thereof for allowing coupling of a plurality of soilless plant cultivating containers together thereby defining a soilless plant cultivating pipe.

Preferably, the receptacle is angularly disposed to the vertical axis of the body.

The body may be manufactured from any suitable plastics and or synthetic material. The body may be of general rectangular form, in cross section. The body may be of any suitable dark colour.

The soilless plant cultivating container may comprise two symmetric elongate halves to be assembled together so as to define the said container.

A sealing arrangement comprising a sealing channel for complementary receiving a sealing element therein, may extend longitudinally the soilless plant cultivating container for sealing off a space defined in-between the two symmetric halves when in assembled mode.

Securing formations may further be provided for securing the assembled halves together in assembled mode.

The receptacle may include spacing formations extending inward from an upper end region thereof for spacing the plant away from the inner surface of the receptacle.

The spacing formations may be in the form of protrusions extending from an inner surface of the receptacle.

A plurality of receptacles will typically be orientated out of register one another on opposing surfaces of the soilless plant cultivating container.

The body may further include channeling means for channeling fluid streaming downward the flow channel toward the plant roots of the plant contained in the 10 receptacle. The channeling means may be in the form of v shaped ridges extending from an inner surface of the body.

The body may also include a disperser element extending from the inner surface thereof for dispersing fluid received from the channeling means.

The disperser element may be of any suitable shape and size and may be located below the v shaped ridges. The disperser element may take the form of a pin extending substantially orthogonally away from the said inner surface.

In order to prevent the overflow of fluid out of the receptacle in instances when the receptacle becomes overgrown with plant root material, guiding formations are provided for guiding fluid out of the receptacle towards the flow channel.

The guiding formations may take the form of a pair of channels defined on opposing peripheral regions of the receptacle, the guiding formations extending substantially vertically.

To promote the exposure of the plant roots to oxygen, as well as to control the temperature inside the receptacle surrounding the plant roots, an air passage for introducing air from outer the body, to the plant roots are provided.

The air passage may be arranged longitudinal the body on a peripheral region thereof. The air passage may include slot formations, for allowing the flow of air out of the passage, toward the receptacle, and thereby the plant roots.

The engagement formations may take the form of male and female engagement formations, shaped and sized to sealably couple with one another so as to inhibit escape of fluid out of the soilless cultivating pipe, when assembled.

According to a further disclosed aspect which is not claimed there is provided a soilless plant cultivating container which includes;
a body having a flow channel defined therethrough;
an arm extending at angle of between 1 and 179 degrees away from the body; and
a receptacle defined at an opposing region of the arm for receiving and supporting a plant therein, wherein the body, arm and receptacle is in fluid communication with one another for allowing fluid received by the receptacle, to flow downstream the arm towards the body.

The soilless plant cultivating container may be manufactured from any suitable plastics and or synthetic material and may be of any suitable dark colour.

The soilless plant cultivating container may comprise two symmetric halves to be assembled together so as to define the said container.

A sealing arrangement comprising a sealing channel for complementary receiving a sealing element therein, may extend longitudinally the soilless plant cultivating container for sealing off a space defined in-between the two symmetric halves when in assembled mode.

Securing formations may further be provided for securing the assembled halves 5 together when in assembled mode.

The receptacle may include spacing formations extending inward from an upper end region thereof for spacing the plant away from inner surface of the receptacle.

The spacing formations may be in the form of protrusions extending from an inner surface of the receptacle. The spacing formation may be in the form of a spacer element shaped and sized to be complementally fit in the receptacle.

The receptacle may be shaped and sized to in turn complementally receive a basket type element therein, which basket type element is configured to receive a seedling plug. The basket type element may be perforated for allowing roots of the seedling plug to extend therethrough towards the arm.

The body may have engagement formations defined on end regions thereof so as to allow coupling of a plurality of soilless plant cultivating containers together, thereby defining a soilless plant cultivating pipe.

The engagement formations may take the form of male and female engagement formations, shaped and sized to sealably couple with one another so as to inhibit escape of fluid out of the soilless cultivating pipe, when assembled.

It should be appreciated that the term plant is to be interpreted so as to include any plant like propagation matter such as seedlings, bulbs, seeds, and the like.

### BRIEF DESCRIPTION OF THE DRAWINGS

The invention will now be described by means of a non-limiting example with reference to the accompanying drawings.

In the drawings:
Figure 1 shows a perspective top view of an embodiment of the soilless plant cultivating container in accordance of the invention;
Figure 2 is a side view of the container as shown in Figure 1;
Figure 3 is a cross sectional side of the container as shown in Figures 1 and 2;
Figure 4 is a perspective top view of one symmetrical halve of the container, as shown in Figures 1 to 3, in accordance with the invention;
Figures 5 and 6 show perspective views of a further embodiment of a soilless plant cultivating container, which is not claimed;
Figures 7 and 8 are perspective and top views respectively, of a basket type element to be used with the further embodiment; and
Figure 9 is an illustration of the spacer element for use with the further embodiment.

### SPECIFIC DESCRIPTION OF THE INVENTION

Referring to the drawings, a preferred embodiment of the soilless plant cultivating container in accordance with the invention is generally depicted by reference numeral 10.

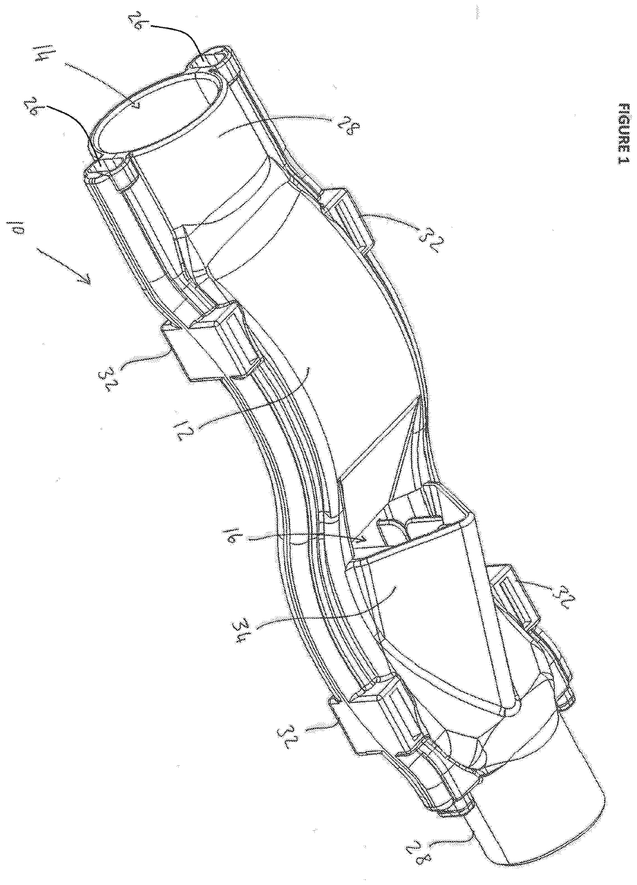

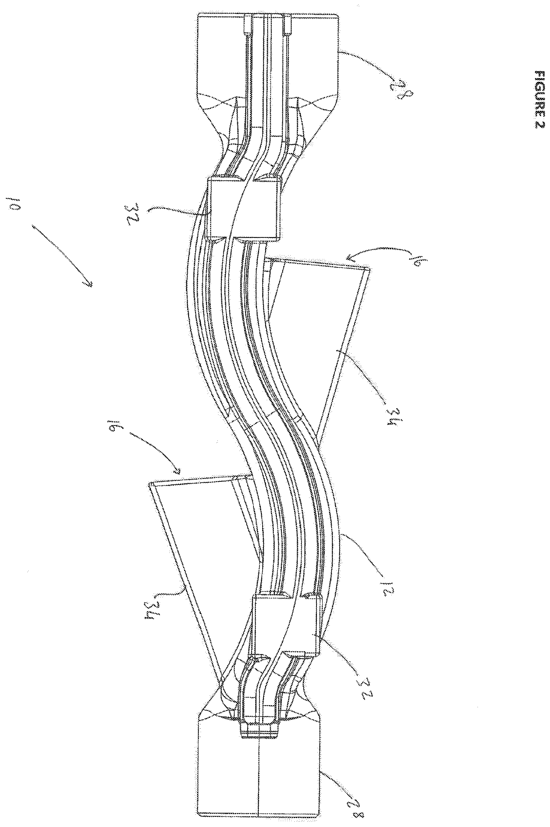

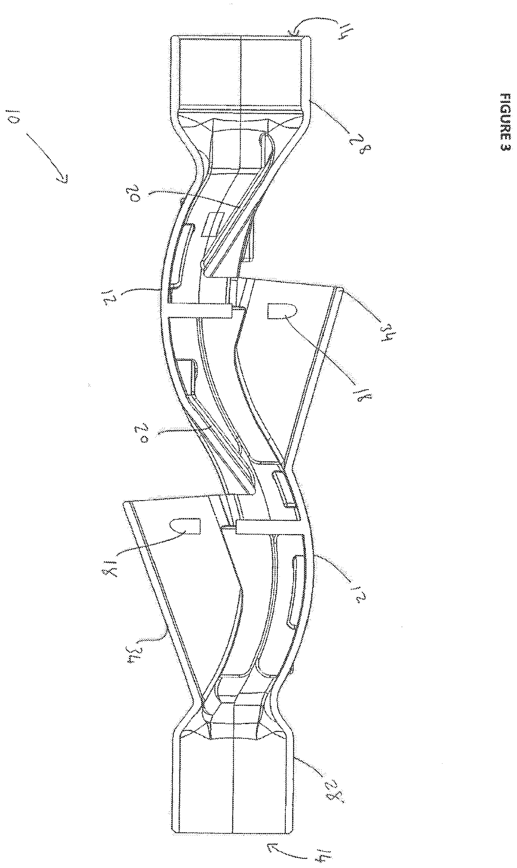

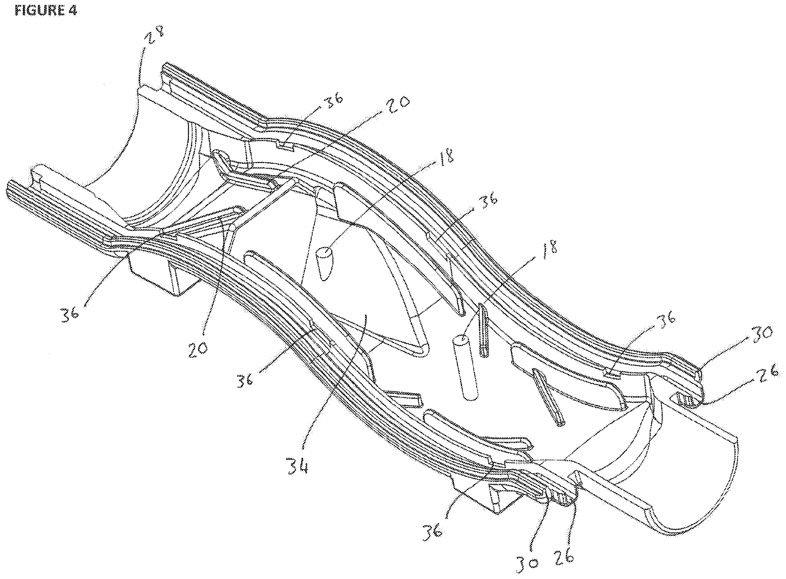

In accordance with an embodiment of the invention, more clearly illustrated in figures 1 to 4, the soilless plant cultivating container 10 includes an elongate body 12 of generally wave shaped form, having a flow channel 14 defined therethrough, a receptacle 16 defined in a sidewall of the body 12 for receiving and supporting a plant therein, spacing formations 18 for spacing the plant relatively centrally the receptacle 16, channeling means in the form of v-shaped ridges 20 for channeling fluid toward the receptacle and thereby to the plant roots contained therein, a disperser element 22 for dispersing fluid received from the channeling means, guiding formations 24 for guiding an overflow of fluid out of the receptacle 16 towards the flow channel 14, an air passage 26 for allowing flow of oxygen and or temperature regulated air from outer the body 12 toward the receptacle and engagement formations 28 defined on end regions of the body 12 so as to allow coupling of a plurality of soilless plant cultivating containers 10 together so as to define a soilless plant cultivating pipe (not shown).

The container 10 can be manufactured from any suitable plastics and or synthetic material and can be of any suitable geometrical shape and size, preferably of general rectangular form, in cross section.

The container 10 further comprises two symmetric elongate halves 28 to be assembled to define the said container 10.

A sealing channel 30 shaped and sized to complementally receive a sealing element (not shown) therein provides for sealing off a space in-between the two symmetric halves when assembled.

Securing formations 32 are further provided for securing the symmetrical halves together when in assembled.

The receptacle 16 includes an aperture defined in the sidewall of the body 12, and a supporting surface 34 angularly disposed relative the body 12.

The spacing formations 18 for securing the plant substantially centrally the receptacle away from the inner surfaces thereof, are in the form of protrusions extending inward from an inner surface of the supporting surface 34 of the receptacle 16.

The receptacles are in fluid communication with the flow channel so that, in use, seedlings are planted in the receptacles with their roots dangling into the flow channel so that the roots can come into contact with a fluid trickling down the flow channel or a gas or a mist in the flow channel.

In order to achieve a maximum density of plants in a typical greenhouse type structure, a plurality of receptacles 16 will typically be orientated out of register relatively one another on opposing outer surfaces of the body 12.

In order to facilitate the desirable downstream flow of fluid in the body 12, the receptacle 16 will typically be located in a concave region of the wave shaped body 12.

The disperser element 22 will typically extend substantially orthogonally away from the inner surface of the body 12.

Guiding formations 24 for guiding an overflow of fluid out of the receptacle 16 towards the flow channel 14 can take the form of a pair of elongate ridges extending from the inner surface of the body, parallel orientated relative each other in a general vertical orientation relative a ground surface. The guiding formations 24 facilitate the flow of fluid out of the receptacle 16 into the flow channel 14 in instances where the normal flow of fluid is obstructed by plant roots. This prevention of overflow of nutrient rich fluid inhibit the growing of algae and other non-desirable organisms on the outer region of the body 12.

In order to control the temperature in the receptacle, especially around the plant roots in the preferred region of 16 to 25 degrees celcius, air passage 26 and slot formation 36 is provided for allowing flow of temperature regulated oxygenated air from outer the body 12 toward the receptacle and thereby the plant roots contained therein. A pair of air passages 26 will typically be extending longitudinally the body 12 on opposing peripheral regions thereof. Slot formations 36, arranged in sidewalls of the air passages 26, facilitate the flow of the temperature regulated oxygenated air towards the receptacle 16, and thereby the plant roots. Air of the required temperature will be introduced intermittently through the passage via the slots 36 to promote maximum plant growth.

Engagement formations 28 defined on end regions of the body 12 allow coupling of a plurality of soilless plant cultivating containers 10 together, thereby defining a soilless plant cultivating pipe. The engagement formations 28 typically includes male and female engagement formations, shaped and sized to sealably couple with one another so as to inhibit escape of fluid out of the soilless cultivating pipe, when assembled.

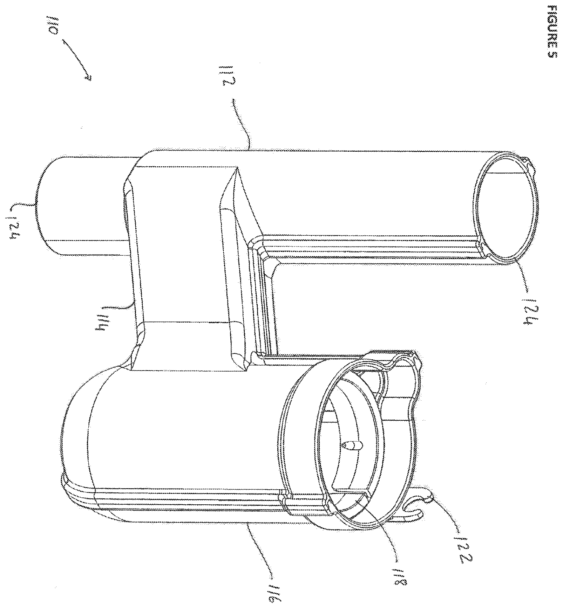

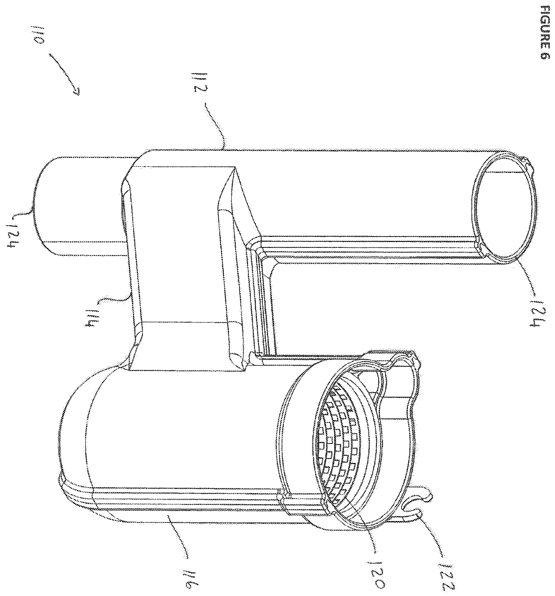

Turning now to figures 5 and 6, in accordance with a further embodiment which is not claimed the soilless plant cultivating container 110 includes a body 112, an arm 114 extending at angle of between 1 and 179 degrees away from the body 112 and a receptacle 116 defined at an opposing end region of the arm 114 for receiving and supporting a plant therein, wherein the receptacle 116, arm 114 and the body 112 is in fluid communication with one another for allowing fluid received by the receptacle 116, to flow downstream the arm 114 towards the body 112.

The body 112 can be manufactured from any suitable plastics and or synthetic material and can be of any suitable dark colour.

The container 110 can comprise two symmetric halves to be assembled together to define the said container 110.

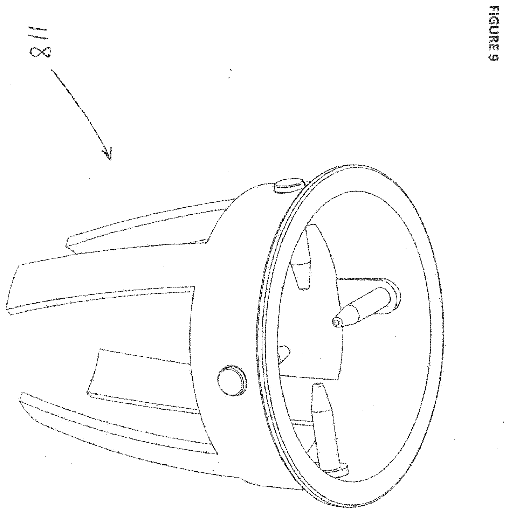

Spacer element 118 provides for spacing the plant substantially centrally and away from the inner surface region of the receptacle 116, see Figure 9.

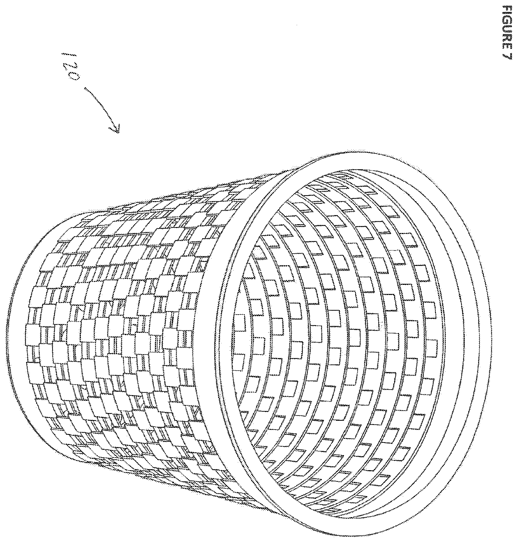

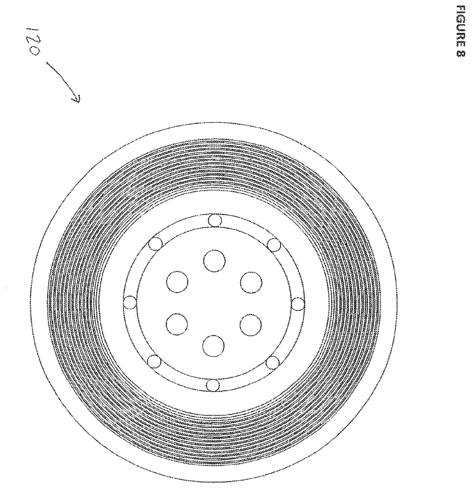

The receptacle 116 can be shaped and sized to in turn complementally receive a perforated basket type element 120 therein, see Figures 7 and 8, shaped and sized to receive a seedling plug therein.

The receptacle 116 further includes a securing formation 122 for receiving and securing a fluid source to the receptacle, for trickling a nutrient enriched fluid to the receptacle 116 for absorption by the plant roots.

Engagement formations 124 are defined on end regions of the body 112 to allow coupling of a plurality of soilless plant cultivating containers 110 together so as to define a soilless growing pipe typically for use a greenhouse type structure.

The Applicant considers the invention advantageous in that a soilless container for the cultivation of plants is provided which is designed to manipulate the flow of fluid inside the container so as to maximise the availability of nutrient rich fluid to the plant roots. Further does the inclusion of the air passages allow a user to control the ambient temperature as well as the availability of oxygen in the receptacle surrounding the plant roots. The arrangement of receptacles on opposing outer surfaces of the container maximise the density of plants to be cultivated

## Claims

1. A soilless plant cultivating container for cultivation of plants in a general vertically orientation relative to a ground surface which includes;
an elongate body (12) of generally wave shaped form, having a flow channel defined there through; and
a receptacle (16) defined in a sidewall of the body, located in a concave region of the elongate body, the receptacle being in fluid communication with the flow channel for receiving and supporting a plant therein, wherein the elongate body includes engagement formations (28) defined on end regions thereof for allowing coupling of a plurality of soilless plant cultivating containers together thereby defining a soilless plant cultivating pipe.

2. A soilless plant cultivating container as claimed in claim 1 wherein the said container is manufactured from any suitable synthetic material.

3. A soilless plant cultivating container as claimed in any one of the preceding claims wherein the said container is of general rectangular form, in cross section.

4. A soilless plant cultivating container as claimed in any one of the preceding claims wherein the said container is of any suitable dark color.

5. A soilless plant cultivating container as claimed in any one of the preceding claims wherein the said container comprises two symmetric elongate halves to be assembled together so as to define the said container.

6. A soilless plant cultivating container as claimed in claim 5 wherein a sealing formation extends longitudinally the said container for sealing off a space defined in-between the two symmetric halves when assembled.

7. A soilless plant cultivating container as claimed in any one of claims 5 or 6 wherein securing formations are provided for securing the symmetric halves together when assembled.

8. A soilless plant cultivating container as claimed in any one of the preceding claims wherein the elongate body includes channeling means for channeling fluid flowing down the flow channel toward the receptacle.

9. A soilless plant cultivating container as claimed in claim 8 wherein the channeling means take the form of v - shaped ridges extending from an inner surface of the elongate body.

10. A soilless plant cultivating container as claimed in any one of claims 8 or 9 wherein the elongate body includes a disperser for dispersing fluid received from the channeling means.

11. A soilless plant cultivating container as claimed in 10 wherein the disperser is in the form of a protrusion extending from the inner surface of the elongate body.

12. A soilless plant cultivating container as claimed in any of the preceding claims wherein the elongate body includes a pair of guiding formations arranged on opposing peripheral regions thereof for guiding an overflow of fluid out of the receptacle, towards the flow channel.

13. A soilless plant cultivating container as claimed in any of the preceding claims wherein the elongate body includes an air passage in fluid communication with the receptacle for introducing temperature and oxygen regulated air to the said receptacle.

14. A soilless plant cultivating container as claimed in claim 13 wherein the air passage is in the form of a pair of passages extending longitudinally the body on opposing peripheral regions thereof.

15. A soilless plant cultivating container as claimed in any one of the preceding claims wherein the receptacle is angularly disposed relative the vertical axis of the elongate body.

16. A soilless plant cultivating container as claimed in any one of the preceding claims wherein a plurality of receptacles are arranged out of register relative one another on opposing outer surfaces of the body.

17. A soilless plant cultivating container as claimed in any one of the preceding claims wherein the receptacle includes spacing formations for spacing the plant substantially centrally the receptacle.

## Patentansprüche

1. Erdfreier Pflanzenkultivierungsbehälter zur Kultivierung von Pflanzen in einer allgemein vertikalen Ausrichtung relativ zu einer Bodenoberfläche, der das Folgende umfasst:
einen länglichen Körper (12) von allgemein wellenförmiger Form, der einen Strömungskanal (14) aufweist, der durch den Körper hindurch definiert ist; und
ein Gefäß (16), das in einer Seitenwand des Körpers definiert ist und in einem konkaven Bereich des länglichen Körpers angeordnet ist, wobei das Gefäß in Fluidverbindung mit dem Strömungskanal steht, um darin eine Pflanze aufzunehmen und zu stützen, wobei der längliche Körper Eingriffselemente (28) aufweist, die an seinen Endbereichen definiert sind, um das Koppeln von einer Vielzahl von erdfreien Pflanzenkultivierungsbehältern miteinander zu ermöglichen, wodurch ein erdfreies Pflanzenkultivierungsrohr definiert wird.

2. Erdfreier Pflanzenkultivierungsbehälter nach Anspruch 1, wobei der Behälter aus einem irgendeinem geeigneten synthetischen Material hergestellt ist.

3. Erdfreier Pflanzenkultivierungsbehälter nach einem der vorhergehenden Ansprüche, wobei der Behälter im Querschnitt eine allgemein rechteckige Form hat.

4. Erdfreier Pflanzenkultivierungsbehälter nach einem der vorhergehenden Ansprüche, wobei der Behälter irgendeine geeignete dunkle Farbe hat.

5. Erdfreier Pflanzenkultivierungsbehälter nach einem der vorhergehenden Ansprüche, wobei der Behälter zwei symmetrische, längliche Hälften umfasst, die zusammengefügt sind, um den Behälter zu definieren.

6. Erdfreier Pflanzenkultivierungsbehälter nach Anspruch 5, wobei sich ein Abdichtungselement in Längsrichtung des Behälters erstreckt, um einen Raum abzudichten, der zwischen den beiden symmetrischen Hälften definiert ist, wenn diese zusammengefügt sind.

7. Erdfreier Pflanzenkultivierungsbehälter nach einem der Ansprüche 5 oder 6, wobei Sicherungselemente bereitgestellt sind, um die symmetrischen Hälften aneinander zu befestigen, wenn diese zusammengebaut sind.

8. Erdfreier Pflanzenkultivierungsbehälter nach einem der vorhergehenden Ansprüche, wobei der längliche Körper Kanalisierungsmittel zum Kanalisieren von Fluid umfasst, das den Strömungskanal hinunter zu dem Gefäß fließt.

9. Erdfreier Pflanzenkultivierungsbehälter nach Anspruch 8, wobei die Kanalisierungsmittel die Form von v-förmigen Rippen haben, die sich von einer Innenoberfläche des länglichen Körpers aus erstrecken.

10. Erdfreier Pflanzenkultivierungsbehälter nach einem der Ansprüche 8 oder 9, wobei der längliche Körper einen Disperser zum Verteilen von Fluid umfasst, das von den Kanalisierungsmitteln erhaltenen wird.

11. Erdfreier Pflanzenkultivierungsbehälter nach Anspruch 10, wobei der Disperser die Form eines Vorsprungs hat, der sich von der Innenoberfläche des länglichen Körpers aus erstreckt.

12. Erdfreier Pflanzenkultivierungsbehälter nach einem der vorhergehenden Ansprüche, wobei der längliche Körper ein Paar von Führungsformationen aufweist, die an gegenüberliegenden peripheren Bereichen davon angeordnet sind, um einen Überlauf von Fluid aus dem Gefäß in Richtung des Strömungskanals zu leiten.

13. Erdfreier Pflanzenkultivierungsbehälter nach einem der vorhergehenden Ansprüche, wobei der längliche Körper einen Luftkanal in Fluidverbindung mit dem Gefäß zum Einführen von temperatur- und sauerstoffregulierter Luft zu dem Gefäß aufweist.

14. Erdfreier Pflanzenkultivierungsbehälter nach Anspruch 13, wobei der Luftkanal die Form eines Paares von Kanälen hat, die sich in Längsrichtung des Körpers an gegenüberliegenden peripheren Bereichen davon erstrecken.

15. Erdfreier Pflanzenkultivierungsbehälter nach einem der vorhergehenden Ansprüche, wobei das Gefäß relativ zu der vertikalen Achse des länglichen Körpers in einem Winkel angeordnet ist.

16. Erdfreies Pflanzenkultivierungsbehälter nach einem der vorhergehenden Ansprüche, wobei eine Vielzahl von Gefäßen an gegenüberliegenden Außenoberflächen des Körpers nicht-übereinstimmend (Englisch: out of register) zueinander angeordnet sind.

17. Erdfreier Pflanzenkultivierungsbehälter nach einem der vorhergehenden Ansprüche, wobei das Gefäß Abstandselemente zur Beabstandung der Pflanze im Wesentlichen im Zentrum des Gefäßes aufweist.

## Revendications

1. Récipient de culture de plante hydroponique pour cultiver des plantes dans une orientation généralement verticale par rapport à une surface de sol qui comprend :
un corps allongé (12) généralement en forme de vague, ayant un canal d'écoulement (14) défini à travers ce dernier ; et
un réceptacle (16) défini dans une paroi latérale du corps, positionné dans une région concave du corps allongé, le réceptacle étant en communication de fluide avec le canal d'écoulement pour recevoir et supporter une plante à l'intérieur de ce dernier, dans lequel le corps allongé comprend des formations de mise en prise (28) définies sur ses régions d'extrémité pour permettre le couplage d'une pluralité de récipients de culture de plante hydroponique ensemble, définissant ainsi un tuyau de culture de plante hydroponique.

2. Récipient de culture de plante hydroponique selon la revendication 1, dans lequel ledit récipient est fabriqué à partir de n'importe quel matériau synthétique approprié.

3. Récipient de culture de plante hydroponique selon l'une quelconque des revendications précédentes, dans lequel ledit récipient a une forme généralement rectangulaire, en coupe.

4. Récipient de culture de plante hydroponique selon l'une quelconque des revendications précédentes, dans lequel ledit récipient a n'importe quelle couleur sombre appropriée.

5. Récipient de culture de plante hydroponique selon l'une quelconque des revendications précédentes, dans lequel ledit récipient comprend deux moitiés allongées symétriques à assembler afin de définir ledit récipient.

6. Récipient de culture de plante hydroponique selon la revendication 5, dans lequel une formation d'étanchéité s'étend longitudinalement par rapport audit récipient afin de sceller un espace défini entre les deux moitiés symétriques lorsqu'elles sont assemblées.

7. Récipient de culture de plante hydroponique selon l'une quelconque des revendications 5 ou 6, dans lequel des formations de fixation sont prévues pour fixer les moitiés symétriques ensemble, lorsqu'elles sont assemblées.

8. Récipient de culture de plante hydroponique selon l'une quelconque des revendications précédentes, dans lequel le corps allongé comprend des moyens d'acheminement pour acheminer le liquide s'écoulant dans le canal d'écoulement vers le réceptacle.

9. Récipient de culture de plante hydroponique selon la revendication 8, dans lequel les moyens d'acheminement adoptent la forme de crêtes en v s'étendant à partir d'une surface interne du corps allongé.

10. Récipient de culture de plante hydroponique selon l'une quelconque des revendications 8 ou 9, dans lequel le corps allongé comprend un dispositif de dispersion pour disperser le fluide reçu des moyens d'acheminement.

11. Récipient de culture de plante hydroponique selon la revendication 10, dans lequel le dispositif de dispersion se présente sous la forme d'une saillie s'étendant à partir de la surface interne du corps allongé.

12. Récipient de culture de plante hydroponique selon l'une quelconque des revendications précédentes, dans lequel le corps allongé comprend une paire de formations de guidage agencées sur ses régions périphériques opposées afin de guider un trop-plein de fluide hors du réceptacle, vers le canal d'écoulement.

13. Récipient de culture de plante hydroponique selon l'une quelconque des revendications précédentes, dans lequel le corps allongé comprend un passage d'air en communication de fluide avec le réceptacle afin d'introduire de l'air régulé en température et en oxygène dans ledit réceptacle.

14. Récipient de culture de plante hydroponique selon la revendication 13, dans lequel le passage d'air se présente sous la forme d'une paire de passages s'étendant longitudinalement par rapport au corps sur ses régions périphériques opposées.

15. Récipient de culture de plante hydroponique selon l'une quelconque des revendications précédentes, dans lequel le réceptacle est disposé de manière angulaire par rapport à l'axe vertical du corps allongé.

16. Récipient de culture de plante hydroponique selon l'une quelconque des revendications précédentes, dans lequel une pluralité de réceptacles sont agencés de manière non alignée les uns par rapport aux autres sur des surfaces externes opposées du corps.

17. Récipient de culture de plante hydroponique selon l'une quelconque des revendications précédentes, dans lequel le réceptacle comprend des formations d'espacement afin d'espacer la plante sensiblement au centre du réceptacle.
